# EUROPEAN PATENT SPECIFICATION

(11) **EP 1 563 780 B1**
(45) Date of publication and mention of the grant of the patent: **18.07.2007**
(21) Application number: 05100323.4
(22) Date of filing: 20.01.2005
(51) Int. Cl.: A47J 43/28

(54) **Ergonomic handle for kitchen utensils made of two materials, non-slip thermoplastic rubber, and plastic (resin).**
Ergonomischer Handgriff für Küchengeräte
Manche ergonomique pour ustensiles de cuisine

(30) Priority: 17.02.2004 CL 27704
(43) Date of publication of application: 17.08.2005
(73) Proprietor: VIRUTEX ILKO, S.A., SANTIAGO (CL)
(72) Inventor: SANTIS GONZALEZ, Fermin Miguel, Cerillos Santiago (CL)
(74) Representative: Elzaburu Marquez, Alberto

(56) References cited:
- DE-A1- 10 142 921
- US-A- 5 737 803

## Description

Ergonomic, oblong handle for kitchen utensils such as a spatula, specially designed to provide more comfort and safety to users, and made of two materials, non-slip thermoplastic rubber, and plastic (resin).

### STATE OF THE ART

The closest to this patent application is the following, patent No US2457394 published on 12/28/1948 by Union Asbestos & Rubber Company titled "Handle for Kitchen Utensils", patent No GB939488 published on 08/16/1963 by Sundt & Company Ltd. titled "Safety Improvements for Kitchen Utensils, and like", patent No JP51115561 published on 12/10/1976 by Tsubasme Kanamono KK titled "Method to Manufacture a Screwable Handle for Kitchen Utensils", patent No GB2208156 published on 03/08/1989 by Arco Metal and Glassware Limit (GB), titled "Rubber, Oblong, Tapered Hole for Hanging Storage Handle", patent No WO9926516 published on 06/03/1999 by David F. Dalury (US) and Griptech Inc. (US), titled "Ergonomic Handle for Hammer", patent No EP0742083 published on 11/13/1996 by Leifheit AG. (DE), titled "Soft Rubber, Fingerprint, and Tapered Hole for Hanging Storage Handle", patent No DE10142921 published on 03/20/2003 by Heinrich Helms (DE), titled "Daily Use Handle for Hand Tools and Kitchen Utensils, with Right-handed and Left-handed Fingerprints". The following patent applications were also found, "kitchen utensil" belonging to FABRICADOS INOXIDABLES, S.A., No U200302129, application date 09/23/2003; "handle with exchangeable kitchen utensils" belonging to DART INDUSTRIES date 09/23/2003; "handle with exchangeable kitchen utensils" belonging to DART INDUSTRIES INC., No E98115447, application date 08/17/1998, and "ergonomic handle for kitchen utensil" belonging to TERRAILLON, No E88420304, application date 09/08/1988.

US-A-5 737 803, issued to Tisdale et al discloses an ergonomic handle for kitchen articles including a hollow elongate body having a top face including an oval recess for the human thumb and a bottom face including a recess for receipt of a human finger when such finger is positioned transversely to the thumb.

### DESCRIPTION OF THE INVENTION

Oblong handle for kitchen utensils like the spatula, including two non-skip material areas providing more safety to users.
Its top view shows a straight axis, with an upper part, which is ovoid and oblong, fitted with a metallic, oblong part; its sides are increasingly narrower to form a slightly narrower center; at the end close to the metallic part there is a recess to rest the thumb finger. Past the center, the handle growths forming an oblong ovoid, thicker than the upper part.

As per its top view, it shows an ovoidal hole to hang the utensil.

As per its side view, the handle axis is bent.

The soft, thermoplastic, non-skid rubber covers the bottom part and ends up in a plane diagonal to the straight axis running to the rear part, from right to left; such plane covers the bottom and upper parts. This material is also found in the recess to rest the thumb finger.

### DESCRIPTION OF THE DRAWINGS

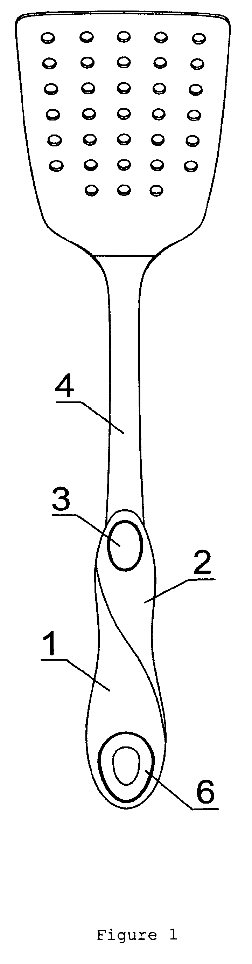

Figure 1 shows an ergonomic utensil handle, composed of a thermoplastic, non-skid rubber part (1) a plastic or resin part (2), a recess for the thumb finger (3) made of non-skid material, the metallic part of the utensil (4), and the pass-through ovoidal hole (6) for hanging storage, in plastic or resin.

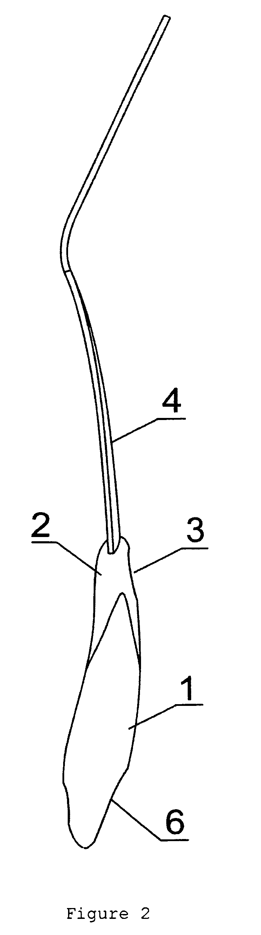

Figure 2 is a side view from the left of the handle in Figure 1, showing its bent shape, and the arrangement of the rubber part (1), a plastic part (2), a recess (3) for the thumb finger and the utensil rubber part (4), and the pass-through ovoidal hole (6) for hanging storage.

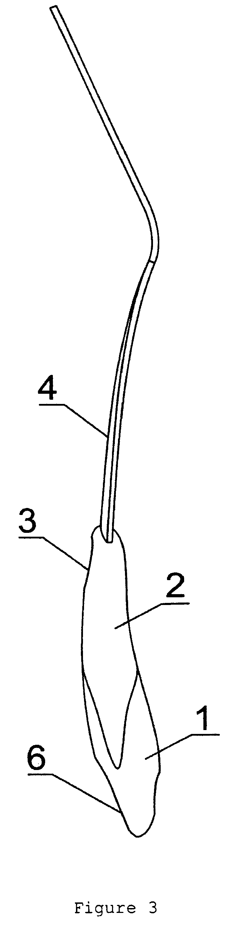

Figure 3 is a side view from the left of the handle in Figure 1, to show the arrangement of the components such as the thermoplastic, non-skid rubber (1), a plastic part (2), a thermoplastic, non-skid recess (3) for the thumb finger, and the utensil metallic part (4), and the pass-through ovoidal hole (6) for hanging storage.

## Claims

1. Oblong and ergonomic handle for spatula-like kitchen utensils, having a generally straight longitudinal axis, intended to be fitted in its upper end with a metallic oblong part (4), **characterized in that** the handle comprises :
- an oblong, ovoidal upper portion (2),
- a slightly narrower center portion,
- an oblong, ovoidal lower portion (1) which is wider than the cited upper portion (2) and comprises an ovoidal perforation (6) to hang the handle;
wherein the handle comprises at least two areas of non-skid material:
- a non-skid soft thermoplastic rubber material covering the cited lower portion (1) of the handle; and
- a plastic or resinous material covering the cited upper portion (2) of the handle; the upper portion (2) comprising a recess (3) to place the thumb which is located close to the upper end of said upper portion (2) and which recess (3) is made of the cited non-skid soft thermoplastic rubber material, so that the handle provides more safety to users.

2. Handle according to claim 1 wherein its side view shows a bent axis.

3. Handle according to claims 1or 2 wherein the interface between the upper portion (2) and the lower portion (1) has ashape similar to the shape in figures 1-3, which is diagonal to the straight longitudinal axis of the handle.

4. Handle according to claim 3 wherein said shape which is diagonal to the straight longitudinal axis, runs from the lower portion (1) to the upper portion (2) of the handle, from the right to the left side.

## Patentansprüche

1. Länglicher und ergonomischer Handgriff für spatelartige Küchengeräte mit einer im Allgemeinen geraden Längsachse, vorgesehen zum Versehen mit einem länglichen Metallteil (4) in seinem oberen Ende, **dadurch gekennzeichnet, dass** der Griff umfasst:
- einen länglichen, eiförmigen oberen Abschnitt (2),
- einen etwas schmaleren mittleren Abschnitt,
- einen länglichen, eiförmigen unteren Abschnitt (1), der breiter als der angeführte obere Abschnitt (2) ist und eine eiförmige Perforation (6) zum Aufhängen des Griffs umfasst;
wobei der Griff mindestens zwei Bereiche aus rutschfestem Material umfasst:
- ein rutschfestes weiches thermoplastisches Kautschukmaterial, das den angeführten unteren Abschnitt (1) des Griffes bedeckt; und
- ein Kunststoff- oder harzartiges Material, das den oberen Abschnitt (2) des Griffes bedeckt; wobei der obere Abschnitt (2) eine Aussparung (3) zum Anordnen des Daumens umfasst, die nahe dem oberen Ende des oberen Abschnitts (2) angeordnet ist und wobei die Aussparung (3) aus dem angeführten rutschfesten weichen thermoplastischen Kautschukmaterial hergestellt ist, sodass der Griff für Anwender höhere Sicherheit liefert.

2. Griff nach Anspruch 1, wobei seine Seitenansicht eine gekrümmte Achse zeigt.

3. Griff nach Ansprüchen 1 oder 2, wobei die Grenzfläche zwischen dem oberen Abschnitt (2) und dem unteren Abschnitt (1) eine Form aufweist, ähnlich der Form in Figuren 1-3, die diagonal zu der geraden Längsachse des Griffes ist.

4. Griff nach Anspruch 3, wobei die Form, die diagonal zu der geraden Längsachse ist, von dem unteren Abschnitt (1) zu dem oberen Abschnitt (2) von dem Griff von der rechten zu der linken Seite verläuft.

## Revendications

1. Manche allongé et ergonomique pour ustensiles de cuisine de type spatule, présentant un axe longitudinal généralement droit, destiné à être pourvu à son extrémité supérieure d'une partie allongée métallique (4), **caractérisé en ce que** ledit manche comprend :
- une partie supérieure ovoïde allongée (2),
- une partie centrale légèrement plus étroite,
- une partie inférieure ovoïde allongée (1), qui est plus large que la partie supérieure citée (2) et comprend une perforation ovoïde (6) pour suspendre le manche ;
dans lequel le manche comprend au moins deux zones de matériau antidérapant :
- un matériau en caoutchouc thermoplastique mou antidérapant couvrant la partie inférieure citée (1) du manche ; et
- un matériau en plastique ou en résine couvrant la partie supérieure citée (2) du manche, ladite partie supérieure (2) comprenant un renfoncement (3) pour placer le pouce qui est situé à proximité de l'extrémité supérieure de ladite partie supérieure (2) et ledit renfoncement (3) étant fait dans le matériau de caoutchouc thermoplastique mou antidérapant cité, de telle manière que le manche présente plus de sécurité pour les utilisateurs.

2. Manche selon la revendication 1 dans lequel la vue latérale dudit manche montre un axe courbé.

3. Manche selon la revendication 1 ou la revendication 2 dans lequel l'interface entre la partie supérieure (2) et la partie inférieure (1) présente une forme similaire à la forme des figures 1 à 3, qui est diagonale par rapport à l'axe longitudinal droit du manche.

4. Manche selon la revendication 3 dans lequel ladite forme, qui est diagonale par rapport à l'axe longitudinal droit, s'étend depuis la partie inférieure (1) jusqu'à la partie supérieure (2) dudit manche, depuis le côté droit jusqu'au côté gauche.
